Europäisches Patentamt

European Patent Office

Office européen des brevets

(11) Veröffentlichungsnummer: **0 573 753 A1**

# (12) EUROPÄISCHE PATENTANMELDUNG

(21) Anmeldenummer: 93105571.9

(22) Anmeldetag: 03.04.93

(51) Int. Cl.⁵: **G03C 1/79**, B05D 3/04

(30) Priorität: **12.06.92 DE 4219194**

(43) Veröffentlichungstag der Anmeldung:
**15.12.93 Patentblatt 93/50**

(84) Benannte Vertragsstaaten:
**BE GB NL**

(71) Anmelder: **Felix Schoeller jr. Papierfabrik
GmbH & Co. KG
Burg Gretesch
D-49086 Osnabrück(DE)**

(72) Erfinder: **Dethlefs, Ralf-Burkhard, Dr.
Dipl.-Chem.
Schledehauser Weg 96
W-4500 Osnabrück(DE)**
Erfinder: **Scholz, Bernd, Dipl.-Ing.
Max-Reger-Strasse 18
W-4500 Osnabrück(DE)**
Erfinder: **Uyting, Udo, Dipl.-Ing.
Hermann-Glüsenkamp-Strasse 8
W-4500 Osnabrück(DE)**

(74) Vertreter: **Rücker, Wolfgang, Dipl.-Chem.
Patentanwalt
Bergiusstrasse 2b
D-30655 Hannover (DE)**

(54) Verfahren zur Herstellung eines Beschichtungsmaterials für fotografische Träger.

(57) Offenbart wird ein Verfahren zur Herstellung eines fotografischen Schichtträgermaterials, das sich durch Vakuum-Vortrocknung der Kunstharze und Masterbatche sowie durch Aufbewahrung und Transport dieser Produkte in einem geschlossenen System mittels gereinigter und getrockneter Luft auszeichnet.

Die Erfindung betrifft ein Verfahren zur Herstellung eines fotografischen Schichtträgermaterials.

Fotografische Schichtträgermaterialien bestehen z. B. aus fotografischen Basispapieren mit Kunstharzbeschichtungen. Diese Kunstharzbeschichtungen sind vorzugsweise beidseitig aufgetragen und bestehen üblicherweise aus einer klaren Polyolefinschicht auf der Rückseite und einer mit Weißpigmenten gefüllten Polyolefinschicht auf der Vorderseite des Basispapiers. Die Vorderseite ist die Seite, die in einem späteren Verfahrensschritt mit lichtempfindlichen fotografischen Emulsionen beschichtet wird.

Die Kunstharzschichten werden nach dem Verfahren der Schmelzextrusion auf das Basispapier aufgetragen.

Fotografische Schichtträgermaterialien dieser Art müssen insbesondere in ihren Oberflächeneigenschaften hohen Qualitätsanforderungen gerecht werden.

Diese Oberflächeneigenschaften werden wesentlich durch die Kunstharzbeschichtungen bestimmt, die deshalb möglichst fehlerfrei sein müssen.

Das setzt voraus, daß auch die Ausgangsprodukte, die die Kunstharz-Beschichtungsmasse bilden, von möglichst geeigneter hoher Qualität sein müssen.

Das wesentlichste Ausgangsprodukt ist das Kunstharz selbst, das üblicherweise ein Polyolefin, insbesondere Polyethylen, ist.

Als Polyethylen werden HDPE (high density polyethylene), LDPE (low density polyethylene) und LLDPE (linear LDPE) eingesetzt.

Für pigmenthaltige Beschichtungen werden zusätzlich sogenannte "Masterbatche" zugemischt. Ein Masterbatch ist eine vorgefertigte Mischung hoher Homogenität von Pigment und Kunstharz. Als Pigmente sind Weißpigmente und Buntpigmente gebräuchlich. Für fotografische Schichtträgermaterialien ist das Weißpigment überwiegend Titandioxid. Es liegt im Masterbatch in einer Konzentration von meistens 50 Gew.-% vor.

Kunstharze und Masterbatche sind in Form von Granulaten, Pellets oder Chips erhältlich.

Die Schmelzextrusion im Beschichtungsextruder erfolgt bei Temperaturen zwischen 250 und 350°C. Bei diesen Temperaturen werden trotz des im Extruder vorherrschenden erhöhten Drucks niedermolekulare Bestandteile und Wasser in den gasförmigen Zustand überführt und hinterlassen nach Austritt des Schmelzfilms aus der Breitschlitzdüse des Beschichtungsextruders Fehlstellen in der Beschichtung:

Geringe Mengen an Feuchtigkeit führen zu den sog. "Wasserzöpfen". Bei etwas höheren Feuchtigkeitsgehalten kommt es zum sog. "lacing". Lacing kann aber auch durch niedermolekulare Bestandteile mit hohem Dampfdruck hervorgerufen werden. Beides führt zu Ausschußmaterial.

Weniger flüchtige niedermolekulare Bestandteile der Beschichtungsmasse setzen sich an den Lippen der Breitschlitzdüse fest, bauen sich dort auf und verursachen dann schmale und scharf begrenzte Kratzer im Schmelzfilm, sog. "Düsenstreifen". Die Düsenlippen müssen daraufhin gereinigt werden, was jeweils zu einer Produktionsunterbrechung führt.

Um diese Störstoffe schon vor der Extrusionsbeschichtung zu entfernen, werden die Ausgangsprodukte bei etwa 80°C für bis zu 24 Stunden vorgetrocknet. Temperatur und Trocknungszeit können nicht unbegrenzt erhöht werden, weil sonst durch thermische Schädigung des Polyethylens neue Probleme auftreten würden.

Bei der Trocknung von Masterbatchen mit Titandioxid kann es je nach Trocknungszeit zu sehr starken Abbaureaktionen kommen, denn Titandioxid fördert diesen Abbau. Je nach Titandioxid-Typ kommt es bereits bei 80°C und einer Trocknungszeit von 1 1/2 - 2 Tagen zu einem Polymerabbau. Dieser Effekt ist besonders bei Anatas ausgeprägt und wird vorwiegend bei hohen Anatas-Konzentrationen von > 10 % im Endprodukt bemerkt. Bei geringeren Konzentrationen ist der Polymerabbau zwar auch vorhanden, wird aber nicht immer erkannt.

Es hat sich gezeigt, daß die Vortrocknung der Ausgangsprodukte nicht in jedem Fall ausreicht, um störungsfrei produzieren zu können. Das gilt besonders für pigmentierte Kunstharzbeschichtungen und insbesondere dann, wenn das in der Beschichtungsmasse verwendete Pigment mit Aluminiumhydroxid, Siliciumdioxid oder anderen hygroskopischen Substanzen nachbehandelt wurde, wie es bei Titandioxid üblich ist.

Flüchtige niedermolekulare Bestandteile werden hauptsächlich mit dem Kunststoff in das System eingebracht. Bei diesen Bestandteilen handelt es sich überwiegend um Dispergierhilfsmittel, Trenn- und Gleitmittel; z. B. Metallstearate, Polyglykole, Wachse.

Es ist deshalb Aufgabe der Erfindung, ein Verfahren zur Herstellung eines fotografischen Schichtträgermaterials zur Verfügung zu stellen, das die unter den Bedingungen des Schmelzextrusionsverfahrens flüchtigen Verbindungen wie Wasser und niedermolekulare Bestandteile schon vor der Verarbeitung aus den Ausgangsprodukten so weitgehend entfernt, daß sie keine Fehlstellen in der Kunstharzbeschichtung hervorrufen können.

Gelöst wird diese Aufgabe durch eine Vakuumtrocknung der Ausgangsprodukte bei < 100 mbar Druck und 40°C bis 90°C Temperatur und Transport mit und Aufbewahrung unter gereinigtem und getrocknetem Gas in einem in sich geschlossenen System.

Eine Vorrichtung zur Vakuumtrocknung von Schüttgütern ist in DD 107 405 grundsätzlich beschrieben. In dieser Patentschrift wird jedoch weder das Schüttgut noch das nach der Extrusionsbeschichtung entstehende Endprodukt näher definiert. Es gibt auch keine Angaben über Druck, Temperatur und Trocknungszeit.

Daß hier aber eine differenziertere Betrachtungsweise notwendig ist, haben die Untersuchungen zur Herstellung von fotografischen Schichtträgermaterialien gezeigt. Während zur Erzielung fehlerfreier Beschichtungen bei ungefülltem/unpigmentiertem Polyethylen eine Trocknung im Vaakum bei 80°C für eine Zeitdauer von 2 - 3 Stunden ausreicht, erhöht sich diese Zeit auf bis zu 6 Stunden für die Masterbatche der Weißpigmente. Titandioxid, welches für fotografische

Schichtträgermaterialien überwiegend eingesetzt wird, kann in der Rutil- oder Anatasform vorliegen und ist immer oberflächenbehandelt. Zur Oberflächenbehandlung werden anorganische Verbindungen wie Aluminiumhydroxid, Siliciumdioxid, Zirkondioxid und/oder organische Verbindungen wie Amine, Alkohole oder Siloxane oder Kombinationen dieser Produkte verwendet. Je nach Art und Menge der Verbindungen, die zur Oberflächenbehandlung benutzt werden, sind z. T. deutlich unterschiedliche Trocknungszeiten der entsprechenden Masterbatche notwendig. Insbesondere Anatas-Masterbatch mit hoher Belegung des Titandioxid durch Aluminiumhydroxid (2 % und mehr) erfordert längere Trocknungszeiten.

Überraschenderweise hat sich ergeben, daß mit Masterbatchen, die unter Vakuum vorgetrocknet wurden, problemlos höher pigmentierte Beschichtungsmassen verarbeitbar waren als mit Masterbatchen, die unter Normaldruck getrocknet wurden. Der maximal zu verarbeitende Pigmentgehalt von Titandioxid im Polyethylen konnte beispielsweise von ca. 17 Gew.-% auf ca. 22 Gew.-% erhöht werden.

Eine Erhöhung des Pigmentgehalts in der Oberfläche fotografischer Schichtträgermaterialien vergrößert die Lichtreflexion und ermöglicht dadurch eine höhere Schärfe fotografischer Bilder. Die Vakuumtrocknung insbesondere der Masterbatche vermeidet folglich nicht nur Fehlstellen in der Kunstharzschicht, sondern ermöglicht auch die Herstellung qualitativ höherwertiger fotografischer Abbildungen.

Um die Vorteile der Vakuumtrocknung auch voll ausschöpfen zu können, darf den vorgetrockneten Ausgangsprodukten bis zur Ausbildung des Schmelzfilms im Beschichtungsextruder keine Möglichkeit zur Aufnahme von Feuchtigkeit mehr gegeben werden. Es ist deshalb unbedingt notwendig, beginnend vom Vakuumtrockner bis hin zum Beschichtungsextruder, ein in sich geschlossenes System der Lagerung, Förderung, Mischung und Dosierung zu benutzen. Zur Aufrechterhaltung der Atmosphäre in diesem geschlossenen System sowie zur Förderung der meistens als Granulat vorliegenden Ausgangsprodukte darf nur gereinigtes und völlig getrocknetes Gas - aus Kostengründen bietet sich Luft an - verwendet werden.

Als Bedingungen, unter denen die Vakuumtrocknung bei der Herstellung fotografischer Schichtträgermaterialien erfolgt, haben sich bewährt:
Druck = < 100 mbar, vorzugsweise < 10 mbar
Temperatur = 40°C - 90°C, vorzugsweise 60°C - 80°C
Trocknungszeit = ≧ 1 Stunde, vorzugsweise 2 bis 9 Stunden
Längere Trocknungszeiten sind ohne Schädigung (Abbau) des Materials möglich.

Vor allem Temperatur und Trocknungszeit sind stark abhängig vom Feuchtigkeitsgehalt des einzusetzenden Ausgangsprodukts.

Die vorgetrockneten Produkte können mit und ohne Zwischenkühlung der Weiterverarbeitung zugeführt werden.

In den Vakuumtrocknern werden die zu trocknenden Produkte ständig umgewälzt. Die Umwälzung erfolgt langsam und schonend, um den Abrieb so gering wie möglich zu halten.

Über einen Außenmantel wird den Vakuumtrocknern die notwendige Wärme mittels eines elektrisch beheizten Warmwasserkreislaufs zugeführt.

Die Vakuumtrockner arbeiten diskontinuierlich, so daß für eine reibungslose Produktion mehrere Trockner zusammengeschaltet sind.

Das getrocknete und gereinigte Gas, bevorzugt Luft, kann auf Temperaturen von bis zu 40°C aufgewärmt sein. Es ist auch möglich, das System mit getrocknetem Stickstoff aus einem Flüssiggas-Vorratstank zu betreiben.

Alle Behältnisse und Rohrleitungen sind entweder aus Edelstahl oder aus Kunststoff-Spiralförderschläuchen.

Das Verfahren zur Herstellung eines fotografischen Schichtträgermaterials, bei dem ein bahnförmiges Basismaterial wie fotografisches Basispapier mittels eines Schmelzextrusionsverfahrens beschichtet wird, besteht aus den folgenden Schritten:

- Trocknung der Ausgangsprodukte Kunstharz und Masterbatch unter Vakuum von < 100 mbar, bei 40°C - 90°C für mindestens 1 Stunde,
- Lagerung, Förderung und sonstige Handhabung der vorgetrockneten Ausgangsprodukte in einem in sich geschlossenen System mit gereinigtem und getrocknetem Gas,
- Dosierung und Abmischung der vorgetrockneten Ausgangsprodukte untereinander und mit sonstigen trockenen Zusatzstoffen,
- Eingabe der Mischung in einen Schmelzextruder mit Breitschlitzdüse und
- Zusammenfügen des Schmelzfilms mit dem Basismaterial in der Laminatorstation des Beschichtungsextruders.

Als Zusatzstoffe sind Antioxidantien, Gleitmittel, Antistatika, optische Aufheller, Nuancierfarbstoffe und Trennmittel üblich.

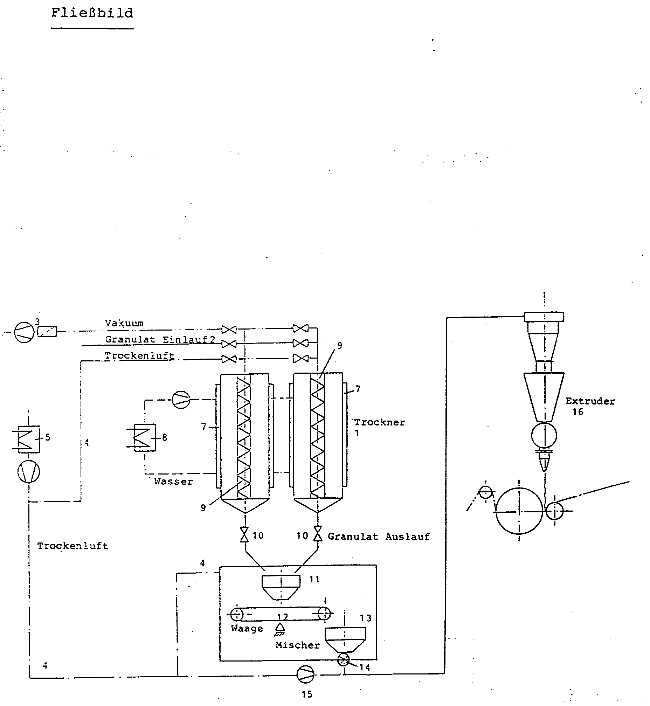

Das erfindungsgemäße Verfahren wird nachfolgend anhand der beigefügten Zeichnung, die ein Beispiel eines Fließbildes zeigt, näher erläutert.

Das Fließbild zeigt beispielhaft zwei Vakuumtrockner 1, die mit dem zu trocknenden Material 2 gefüllt werden. Angeschlossen an die Trockner ist der Vakuumerzeuger 3 und das Leitungssystem 4, welches über eine Vorwärmung 5 und einen Kompressor 6 mit gereinigter und getrockneter Luft gespeist wird.

Die Vakuumtrockner 1 werden über einen Außenmantel 7 mit Warmwasser aufgeheizt. Das Warmwasser wird im Kreislauf geführt und erhält seine notwendige Energie über einen Wärmetauscher 8.

Innerhalb der Vakuumtrockner befinden sich Schneckenförderer 9, die das zu trocknende Material langsam und schonend umwälzen.

Nach Beendigung des Trocknungsvorgangs wird der Vakuumtrockner mit der gereinigten und getrockneten Luft gefüllt, das getrocknete Material über die Auslaufschieber 10 nach Bedarf zum Zwischenbehälter 11, dann zur Waage 12 und zum Vormischer 13 abgelassen. In den Vormischer münden auch die - hier nicht eingezeichneten - Leitungen der anderen, nach gleichem Schema vorgetrockneten Materialien, welche für die Endabmischung erforderlich sind. Zwischenbehälter, Waage und Vormischer werden unter gereinigter und getrockneter Luft gehalten.

Über eine Zellradschleuse 14 wird die getrocknete Endabmischung dann mittels Druckluft, erzeugt durch Kompressor 15, zum Beschichtungsextruder 16 befördert und verarbeitet.

Die nachfolgenden Beispiele sollen die Erfindung verdeutlichen:

Tabelle 1 zeigt die Ausgangsprodukte mit ihren Restfeuchten und den Daten der Vortrocknung.

Tabelle 1

| | | Ausgangs-produkt | Trocknungsbedingungen | | | Feuchtegehalt – ppm – | |
|---|---|---|---|---|---|---|---|
| | | | Druck mbar | Temp. °C | Zeit h | vor | nach |
| | | | | | | Trocknung | |
| | A1 | HDPE* | <10 | 80 | 3 | 620 | 240 |
| | A2 | LDPE** | <10 | 80 | 3 | 900 | 300 |
| Vergl. | A3 | LDPE | | | 0 | 1800 | 1800 |
| | A4 | LLDPE*** | <10 | 50 | 6 | 860 | 210 |
| | B1 | MB–Rutil° | <10 | 80 | 4 | 1050 | 280 |
| | B2 | MB–Rutil | <10 | 80 | 6 | 1050 | 100 |
| Vergl. | B3 | MB–Rutil | 1016 | 80 | 4 | 1050 | 500 |
| | C1 | MB–Anatas°° | <10 | 80 | 7 | 1100 | 90 |
| Vergl. | C2 | MB–Anatas | 1016 | 80 | 6 | 1100 | 440 |
| Vergl. | C3 | MB–Anatas | 1016 | 90 | 4 | 1100 | 610 |

```
*HDPE   =       High density polyethylene
**LDPE=         Low density polyethylene
***LLDPE=       Linear low density polyethylene
°MB–Rutil=      Titandioxid-Masterbatch (Rutil-Typ)
°°MB–Anatas=  Titandioxid-Masterbatch (Anatas-Typ)
```

Tabelle 2 zeigt die Zusammensetzung der Beschichtungsmassen.

Tabelle 2

| Beispiel | | Ausgangsprodukte in Gew.-% | | | | | | | | | |
|---|---|---|---|---|---|---|---|---|---|---|---|
| | | A1 | A2 | A3 | A4 | B1 | B2 | B3 | C1 | C2 | C3 |
| 1° | | 27 | 64 | - | 9 | - | - | - | - | - | - |
| 2* | | 7,5 | 52,5 | - | 15 | 25 | - | - | - | - | - |
| 3* | | 7,5 | 52,5 | - | 15 | - | 25 | - | - | - | - |
| 4* | | 7 | 49 | - | 14 | - | - | - | 30 | - | - |
| V1° | Vergl. | 27 | 9 | 64 | - | - | - | - | - | - | - |
| V2* | Vergl. | 7,5 | 52,5 | - | 15 | - | - | 25 | - | - | - |
| V3* | Vergl. | 7 | 49 | - | 14 | - | - | - | - | 30 | - |
| V4* | Vergl. | 7 | 49 | - | 14 | - | - | - | - | - | 30 |

*Den Mischungen wurden als Masterbatche noch zugesetzt:

0,5 Gew.-% Ultramarinblau o,2 Gew.% Calciumstearat

° Die Mischungen 1 und V1 wurden auf die Rückseite eines fotografischen Basispapieres aufgetragen, die restlichen Mischungen auf die Vorderseite.

Alle Komponenten wurden in einem geschlossenen System verarbeitet mit Hilfe von gereinigter, getrockneter Luft.

Die Mischungen wurden in einem Beschichtungsextruder bei 310°C zu Schmelzfilmen verarbeitet.

Die Schmelzfilme wurden auf ein fotografisches Basispapier, welches vorher einer Coronabehandlung unterworfen wurde, aufgebracht mit 30 g/m$^2$.

Tabelle 3 zeigt die Versuchsergebnisse.

EP 0 573 753 A1

Tabelle 3

| Beispiel | | Auftreten von Wasserzöpfen bzw. lacing | Auftreten von Düsenstreifen |
|---|---|---|---|
| 1 | | gar nicht* | gar nicht* |
| 2 | | gar nicht* | gar nicht* |
| 3 | | gar nicht* | gar nicht* |
| 4 | | gar nicht* | gar nicht* |
| V1 | Vergleich | sofort | nach 8 Stunden |
| V2 | Vergleich | sofort | nach 18 Stunden |
| V3 | Vergleich | nach 10 Minuten | nach 20 Stunden |
| V4 | Vergleich | sofort | nach 14 Stunden |

*"gar nicht' bedeutet "nicht nach 5tägiger Produktion".

**Patentansprüche**

1. Verfahren zur Herstellung eines fotografischen Schichtträgermaterials, bestehend aus einem fotografischen Basismaterial mit mindestestens einseitiger Kunstharzbeschichtung, die überwiegend aus Kunstharz oder aus Kunstharz plus Kunstharz-Masterbatch besteht und mittels eines Schmelzextrusionsverfahrens auf das Basismaterial aufgetragen wird, dadurch gekennzeichnet, daß
   - das Kunstharz und/oder das Kunstharz-Masterbatch bei Temperaturen von 40°C bis 90°C unter Vakuum von < 100 mbar Druck vorgetrocknet wird,
   - das vorgetrocknete Kunstharz und/oder das vorgetrocknete Kunstharz-Masterbatch unter gereinigtem und getrocknetem Gas gehalten wird,
   - das vorgetrocknete Kunstharz und das vorgetrocknete Kunstharz-Masterbatch in einem geschlossenen System mit gereinigtem und getrocknetem Gas befördert wird,
   - das vorgetrocknete Kunstharz und das vorgetrocknete Kunstharz-Masterbatch entsprechend der Mischungszusammensetzung der Kunstharzbeschichtung miteinander und gegebenenfalls mit weiteren trockenen Zusatzstoffen gemischt wird unter gereinigtem und getrocknetem Gas,
   - die hergestellte Mischung mittels gereinigtem und getrocknetem Gas zu einem Schmelzextruder befördert wird,

2. Verfahren nach Anspruch 1, dadurch gekennzeichnet, daß das gereinigte und getrocknete Gas gereinigte und getrocknete Luft ist,

3. Verfahren nach Anspruch 1, dadurch gekennzeichnet, daß die Zeit der Vakuumtrocknung mindestens 1 Stunde, vorzugsweise zwischen 2 und 9 Stunden beträgt,

4. Verfahren nach Anspruch 1, dadurch gekennzeichnet, daß das Kunstharz ein Polyolefin ist.

5. Verfahren nach Anspruch 1, dadurch gekennzeichnet, daß das Kunstharzmasterbatch ein Polyolefin-Weißpigment-Gemisch ist.

6. Verfahren nach Anspruch 5, dadurch gekennzeichnet, daß das Weißpigment bevorzugt ein Titandioxid vom Rutil- oder Anatas-Typ ist.

7. Fotografisches schichtträgermaterial, dadurch gekennzeichnet, daß es unter Verwendung von Material, welches nach dem Verfahren gemäß Anspruch 1 - 6 behandelt wurde, hergestellt ist.

6

## Fließbild

Vakuum
Granulat Einlauf2
Trockenluft

Trockner
1

7

Trockner
1

9

Wasser

9

10   10 Granulat Auslauf

Trockenluft

4

11

Waage   12   13

Mischer

14

15

Extruder
16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-3 210 434 (MITSUBISHI) <br> * Ansprüche * <br> --- | 1-7 | G03C1/79 <br> B05D3/04 |
| Y | JP-A-2 148 032 (MITSUBISHI) <br> * das ganze Dokument * <br> --- | 1-7 | |
| Y | US-A-4 168 913 (KONO) <br> * Ansprüche; Abbildungen * <br> --- | 1-7 | |
| Y | PATENT ABSTRACTS OF JAPAN <br> vol. 12, no. 129 (P-692)(2976) 21. April 1988 <br> & JP-A-62 253 156 ( MITSUBISHI ) 4. November 1987 <br> * Zusammenfassung * <br> --- | 1-7 | |
| Y | Week 8542, 22. November 1985 <br> Derwent Publications Ltd., London, GB; <br> & SU-A-1 148 639 (AGRIC CHEMISATN) 7. April 1985 <br> * Zusammenfassung * <br> --- | 1-7 | RECHERCHIERTE SACHGEBIETE (Int. Cl.5 ) |
| A | EP-A-0 373 300 (SCÖLLER) <br> * Anspruch 1 * <br><br> ----- | 1-7 | G03C <br> B05D <br> B01F <br> B29C |

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1993 | MAGRIZOS S. |